Europäisches Patentamt

European Patent Office

Office européen des brevets

(19)

(11) Publication number: **0 036 767**
**B1**

# EUROPEAN PATENT SPECIFICATION

(12)

(45) Date of publication of patent specification: **01.08.84**

(51) Int. Cl.³: **G 11 B 5/64, H 04 N 5/782**

(21) Application number: **81301203.6**

(22) Date of filing: **20.03.81**

(54) Magnetic recording method.

(30) Priority: **25.03.80 JP 38447/80**

(43) Date of publication of application:
**30.09.81 Bulletin 81/39**

(45) Publication of the grant of the patent:
**01.08.84 Bulletin 84/31**

(84) Designated Contracting States:
**DE FR GB**

(56) References cited:
**DE - A - 2 731 924**
**DE - A - 3 022 946**
**DE - B - 2 007 842**
**GB - A - 1 427 731**
**GB - A - 2 005 513**

**Proc. of the IEEE, Vol. 64, No. 2, Feb. 1976,**
**p.196-208**
**Scholz Handbuch der**
**Magnetbandspeichertechnik, München 1980,**
**p.103-104**

(73) Proprietor: **Matsushita Electric Industrial Co., Ltd.**
**1006, Oaza Kadoma**
**Kadoma-shi Osaka-fu, 571 (JP)**

(72) Inventor: **Kitamura, Sadafumi**
**24-1-404, Miiminamimachi**
**Neyagawa-shi Osaka-fu (JP)**
Inventor: **Taniguchi, Hiroshi**
**15-15, Kuzuhamisaki, 3-chome**
**Hirakata-shi Osaka-fu (JP)**

(74) Representative: **Crawford, Andrew Birkby et al,**
**A.A. THORNTON & CO. Northumberland House**
**303-306 High Holborn**
**London WC1V 7LE (GB)**

Courier Press, Leamington Spa, England.

## Description

This invention relates to a magnet recording method, and more particularly relates to a method for recording superimposed two frequency signals such as the frequency modulated luminance signal and frequency converted chrominance signal in a color video signal recording, optionally.

Recently magnetic video recording techniques have remarkably progressed in recording density. Short wave and narrow track width recording should be performed in order to increase the recording density. For this purpose, it is required that the influence of self-demagnetization in a short wave range is reduced, for which it is effective to make the magnetic layer thinner and the coercive force (Hc) larger. A metal evaporated tape (hereinafter referred to briefly as ME tape), plated tape, ion plating tape, etc., have been proposed as a recording medium having a thin magnetic layer of a large coercive force (Hc).

The ME tape has already partially been put in practical audio recording use. A magnetic layer of the ME tape is deposited onto a base by vacuum evaporation of Co, Fe, Cr, etc. Therefore it is possible to form the magnetic layer by 100% of metal and with the thickness between 100Å and 3000Å. The thickness for ordinary practical use is about 1000Å.

On the other hand, the conventional coating-type magnetic tape (hereinafter referred to as a coating tape) has a magnetic layer comprised of a mixture of a magnetic material powder and a binder, and the content ratio of the magnetic material is about 30%. The thickness of the magnetic layer is about $5\mu$m. Thus the magnetic layer of the ME tape is remarkably thinner than the coating tape.

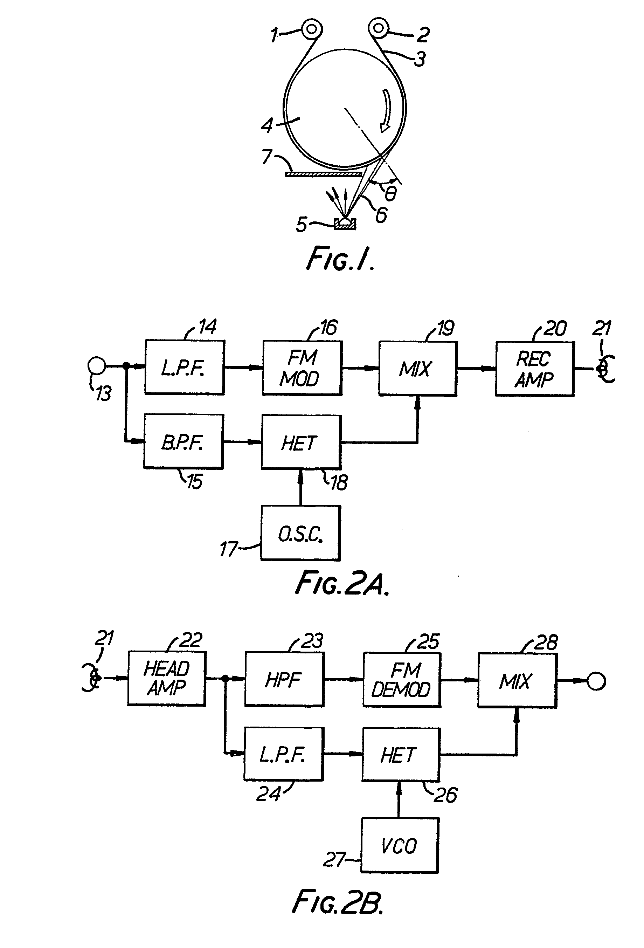

The ME tape of large Hc suitable for magnetic recording is obtained by performing vacuum evaporation with a device as shown in Figure 1.

· In Figure 1, a numeral 1 denotes a tape winder and 2 a base film feeder. A base film 3 is fed from the base film feeder 2 and is wound up onto the winder 1 after passing around a roller 4. The roller 4 is controlled in temperature and thereunder is disposed a crucible 5 containing a molten magnetic material such as Co. The vapor of the magnetic material is melted at 1000 to 1500°C and disperses as shown by the arrows 6 from the crucible 5 and a part of the base film 3 is shielded by a baffle plate 7, so that only a part of the vapor at a controlled projection angle $\theta$ is deposited on the base film 3. The coercive force Hc of the magnetic tape is controlled by changing the location of the baffle plate 7, i.e. the projection angle $\theta$ of the vapor against the base film 3 on the roll 4.

Thus the resulting ME tape has a remarkably thin magnetic layer, superior dispersion of magnetic material, a substantially square B-H characteristic curve of about 90% and a high coercive force Hc.

The ME tape is advantageous for recording short wavelength signals as follows:

The losses during electromagnetic transducing which occur in the recorded wavelength include a thickness loss and a self-demagnetization loss. Both the losses are relative to $t/\lambda$ where $t$ is a thickness of the magnetic layer and is a recorded wavelength. Therefore the shorter the recorded wavelength is, or the thicker the thickness of the magnetic layer is, the larger the losses become. As seen from this characteristic, these losses are more problematic in the short wavelength range. By using a tape having a thin magnetic layer such as the ME tape, those losses are substantially decreased.

There are problems to be overcome when such a ME tape is used for magnetic recording and reproducing a wide band signal such as that used in a color video tape recorder (VTR), these will be described as follows:

Generally in a home-use VTR, a color video signal is recorded in a multiplex signal state composed of a frequency modulated luminance signal and a frequency converted chrominance signal having a frequency band which is lower than that of the frequency modulated luminance signal. Figure 2A and 2B are basic block diagrams for performing the such a recording method.

Figure 2A is a block diagram of the recording system. An input video signal is supplied to a terminal 13 which is separated into a luminance signal component by a low-pass filter (LPF) 14 and a chrominance signal component by a band-pass filter (BPF) 15. The luminance signal is frequency-modulated by an FM modulator 16. The chrominance signal is converted into a band which is lower than that of the frequency modulated luminance signal by a heterodyne frequency converter 18 with an output of a fixed oscillator (OSC) 17. Then the frequency modulated luminance signal and frequency converted chrominance signal are mixed by a mixer 19 and the mixed signals are amplifier by a recording amplifier 20 to be recorded by a video head 21.

Figure 2B is a block diagram at the reproduction system. A signal transduced by the video head 21 is amplified by a head amplifier 22 and therefrom is separated the frequency modulated luminance signal by a high-pass filter (HPF) 23 and the frequency converted chrominance signal by a low-pass filter (LPF) 24. The frequency modulated luminance signal is demodulated by an FM demodulator 25 into the luminance signal. The frequency converted chrominance signal is converted into the original chrominance signal by a frequency converter 26 with an output of a variable oscillator 27. The variable oscillator 27 usually comprises an APC circuit or the like, and is operated to remove a phase distortion of the reproduced color burst signal. Thus reproduced luminance and chrominance signals are mixed by a mixer 28, so that original color video signal is reproduced.

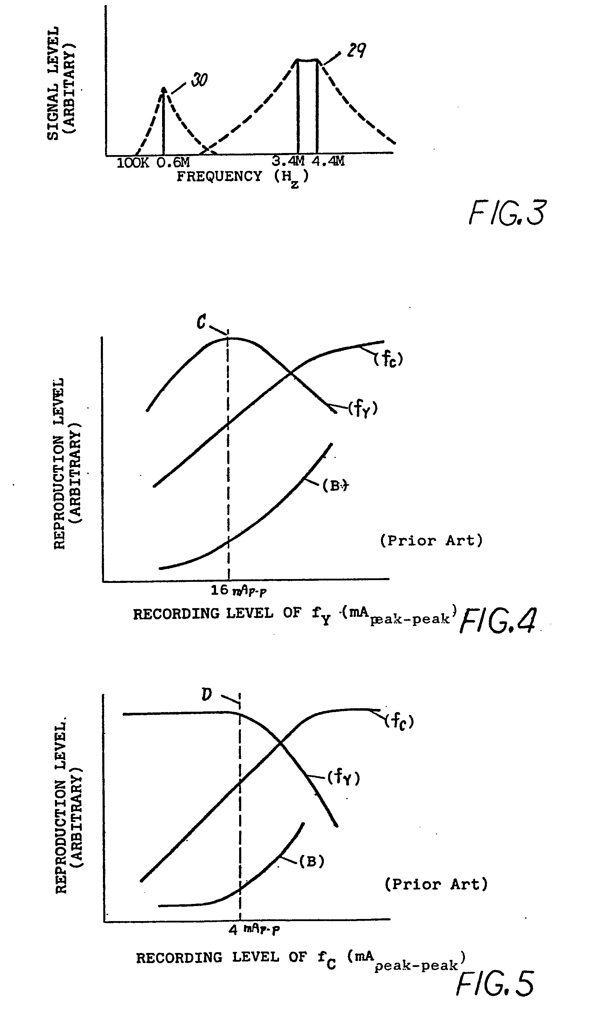

The spectra of the multiplex recording-signal in NTSC system is shown in Figure 3, in which the FM luminance signal is represented by 29 and the frequency converted chrominance signal by 30. The carrier frequency of the former is from 3.4 MHz to 4.4 MHz and that of the latter is 630 KHz. The recorded wavelength of these signals ranges from 1 to 60 $\mu$m. Because of such a wide range of recorded wavelength, the multiplex signal of the frequency modulated luminance signal and the frequency converted chrominance signal (hereinafter referred to as $f_Y$ and $f_c$, respectively) should be recorded in specified conditions of recording current of each signal.

The method of determining such conditions in the conventional magnetic recording using the coating tape has been as follows:

Figure 4 shows the characteristics fundamental to determination of current of the frequency modulated luminance signal $f_Y$. Referring to Figure 4, curves $(f_Y)$, $(f_c)$ and (B) represent the relationships of reproduced $f_Y$ level, reproduced $f_c$ level and cross modulation level expressed by the ratio of reproduced level of $(f_Y-2f_c)$ cross modulation component to that of $f_Y$, respectively, with respect to the recording current of $f_Y$, under the condition of fixing the mixing ratio of recording current of $f_c$ to that of $f_Y$. The $(f_Y-2f_c)$ component represents one of the components of cross modulation of $f_Y$ and $f_c$. The reason why this component is taken into consideration is as follows.

Generally in VTR the electromagnetic transducing process of tape to head can be considered to be approximately equivalent to passing through a system having a 3rd distortion. When the two-frequency multiplex signal including $f_Y=A \sin \alpha$ and $f_c=B \sin \beta$ is applied to such system, the output component caused by the 3rd distortion is represented as follows:

$$(A \sin \alpha+B \sin \beta)^3=(\frac{3}{4}A^3+\frac{3}{2} AB^2)\sin \alpha+( \frac{3}{4}B^3+\frac{3}{2}A^2B)\sin \beta$$

$$-\frac{1}{4} A^3 \sin 3\alpha-\frac{1}{4} B^3 \sin 3\beta-\frac{3}{4}AB^2 \sin(\alpha\pm2\beta)$$

$$+\frac{3}{4}A^2B \cdot [\sin(2\alpha-\beta)-\sin(2\alpha+\beta)]$$

Among the distortion components in the above expression, the 3rd and 6th terms are removed due to the limitation of the transferable frequency band width of the reproduction system. The 1st, 2nd and 4th terms are negligible small compared with the fundamental signal components $f_Y$ and $f_c$. The 5th term which composes $(f_Y\pm2f_c)$ component, however, becomes noise of $2f_c$ after FM demodulation. This noise should be suppressed lower than the reproduced $f_Y$ level usually by more than 30 dB.

From the characteristics of Figure 4, the recording current of $f_Y$ is determined. The optimum condition is obtained when it has the value at a point C in Figure 4, at which the reproduced level of $f_Y$ becomes maximum.

Figure 5 shows the characteristics which is the base for determining a recording current of $f_c$. Referring to Figure 5, curves $(f_Y)$, $(f_c)$ and (B) represent the relationship of the reproduced $f_Y$ level, the reproduced $f_c$ level and the cross modulation

$$\frac{f_Y-2f_c}{f_Y},$$

respectively, with respect to the recording current of $f_c$, under the condition of keeping $f_Y$ current constant at the point C in Figure 4. The drop of reproduced $f_Y$ level in larger recording current range caused by an increased self-demagnetisation due to an increase of the $f_c$ current.

In consideration of the decrease of reproduced $f_Y$ level and the increase of the cross modulation, the $f_c$ recording current is determined at a point D in Figure 5.

The recording currents of $f_Y$ and $f_c$ in VTR using a coating tape are thus determined and usual ratio of the recording currents of $f_Y$ and $f_c$ is about 4:1.

On the other hand, in case where there is employed a magnetic recording medium having extremely thin magnetic layer such as ME tape, characteristics of recording and reproducing are fairly different from those in the case of conventional coating tape, so that above mentioned method cannot effectively be applied thereto.

It is an object of the present invention to provide a magnetic recording method for recording a two-frequency multiplex signal which is suitable for a system using a magnetic recording medium having a thin magnetic layer, whereby large reproduction signal output is obtained.

A magnetic recording method according to the invention comprises a method for recording on a magnetic recording medium a multiplex signal comprising two principal signals of different frequency, and: using a magnetic recording medium having a magnetic metal layer of thickness less than the recorded wavelength of each of said two principal signals; characterised by recording the higher frequency one of said principal signals at a recording current having a lower limit 2dB larger than the lower limit of the recording current with which a reproduced output level is saturated and a maximum limit not exceeding the current for which the reproduced output level is reduced from said saturated condition by 1dB; and recording said other of said principal signals at a recording current between a quarter and a half of that for recording said higher frequency signal.

Besides said signals which are principal signals, another one or more signals may be recorded in multiplex condition provided that such additional signals are suppressed in current level so as not to influence substantially the reproduction of the two principal signals.

In order that the present invention be more clearly understood, the embodiments thereof will be described as an example only with reference to the accompanying drawings, wherein:

Figure 1 is a sectional view of a deposition device used for an example of a metod of making a metal evaporated tape (ME tape);

Figures 2A and 2B are block diagrams showing an example of magnetic recording and reproducing system for a video signal;

Figure 3 is a graph showing a spectrum of a recording signal in a video tape recorder (VTR) of NTSC system;

Figures 4 and 5 are graphs showing electromagnetic transducing characteristics of a coating tape in a VTR according to the prior art;

Figures 6 and 7 are graphs showing electromagnetic transducing characteristics of the ME tape in a VTR for explaining the present invention; and

Figure 8 is a chart for explaining a magnetization according to a recorded signal in a magnetic recording mediums.

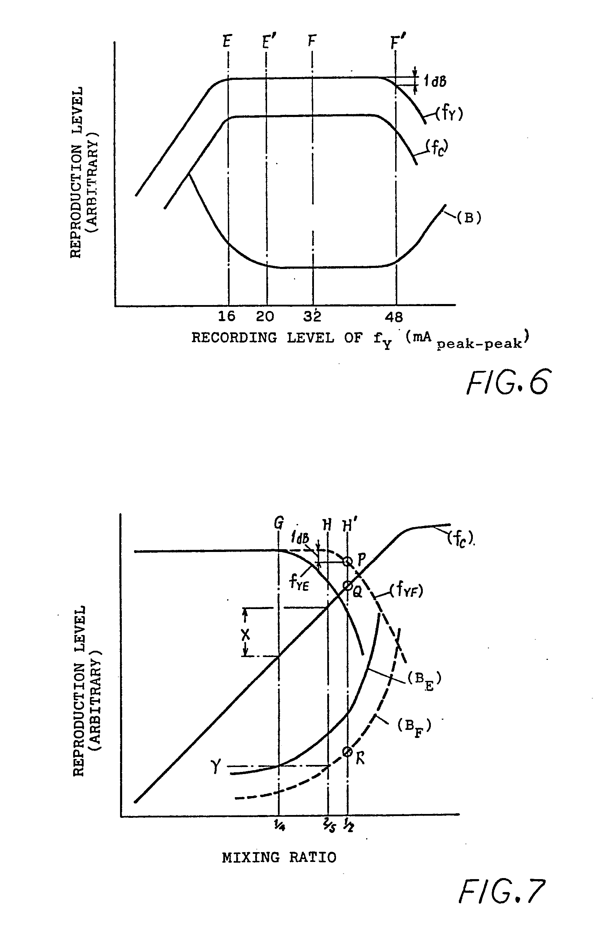

Figures 6 and 7 are graphs showing the electromagnetic transducing characteristics of the ME tape in case of the multiplex recording to the frequency modulated luminance signal $f_Y$ and the frequency converted chrominance signal $f_c$. Figure 6 shows the similar characteristics to that of Figure 4 in the conventional method. In this figure, curves $(f_Y)$, $(f_c)$ and $(B)$ represent the relation of reproduced level of $f_Y$, that of $f_c$ and cross modulation

$$\frac{f_Y - 2f_c}{f_Y},$$

respectively, with a recording current of $f_Y$, under the condition of constant mixing ratio of the recording current of $f_c$ to that of $f_Y$ at 2/5. As seen from Figure 6, the reproduction levels of $f_Y$ and $f_c$ are saturated with the $f_Y$ recording current of a certain value, are kept in the saturation with the $f_Y$ recording current up to another certain value, and are reduced from the saturation level with the $f_Y$ recording current exceeding the higher certain value. In the lower range of the $f_Y$ recording current, the cross modulation level are decreased with increase of the $f_Y$ recording current, and it is kept constant with the $f_Y$ recording current above a certain value. It begins to increase with the $f_Y$ recording current exceeding another certain value. From these characteristics, it is seen that if $f_Y$ recording current is in the range in which the reproduction levels of $f_Y$ and $f_c$ are in saturation, the cross modulation level exhibits fairly low value, so that the electromagnetic transducing is performed in an advantageous condition.

Figure 7 shows the electromagnetic transducing characteristics when the recording current of $f_c$ is changed, with the $f_Y$ recording current being kept at constant values, i.e., values represented by points E and F in Figure 6. The point E represents the value with which the saturation of the reproduction level begins, and the point F represents the value larger than that of the point E by 6dB. The abscissa of Figure 7 is expressed by the ratio of the recording current of $f_c$ to that of $f_Y$ (herein after referred to as mixing ratio), for the sake of easiness of comparison of the two cases. Curves $(f_{YE})$ and $(f_{YF})$ represent the relation between the reproduced $f_Y$ level and the mixing ratio, and curves $(B_E)$ and $(B_F)$ represent the relation between the cross modulation level and the mixing ratio. The curves $(f_{YE})$ and $(B_E)$ of solid lines correspond to the case where $f_Y$ recording current has the value at the point E, and the curves $(f_{YF})$ and $(B_F)$ of broken lines the point F. A curve $(f_c)$ represents the relation between the reproduced $f_c$ level and the mixing ratio at both the points E and F in Figure 6.

Points G and H in Figure 7 represent values of the mixing ratio at which the reproduced $f_Y$ level begins to decrease, corresponding to each case of the operating value of $f_Y$ recording current. At these two points G and H, the reproduced $f_Y$ levels are nearly equal to each other, the cross modulations are nearly at the same level represented by Y, and the reproduced $f_c$ level at the point H is higher than that at the point G by a difference X. Namely if $f_Y$ is recorded at the current of the point F and the mixing ratio is set at the value of the point H, a high reproduced $f_c$ level is obtained.

Thus the characteristic curve of the reproduced $f_Y$ level such as in Figure 7 varies in accordance with the $f_Y$ recording current. However at the $f_Y$ recording current above the value of a point E' in Figure 6, such characteristic curve does not vary and is similar to that represented by the curve $(f_{YF})$ in Figure 7. The point E' represents the $f_Y$ recording current larger by 2dB than that with which the reproduced $f_Y$ level reaches the saturation in Figure 6. This $f_Y$ recording current at the point E' coincides with above-mentioned certain value above which the cross modulation is kept low constant level.

It is not practical that $f_Y$ is recorded at the recording current above the value of a point F' in Figure 6 with which the reproduced $f_Y$ level is reduced from the saturation level thereof by 1dB, because of the decrease of the reproduced $f_Y$ level and increased cross modulation. The optimum characteristic represented by the curve $(f_{YF})$ in Figure 7 is maintained with the $f_Y$ recording current up to the value of the point F' in Figure 6.

The above-mentioned relations between the characteristic curves $(f_Y)$, $(f_c)$ and (B) are also obtained in the conditions of various mixing ratio from 1/5 to 1/2, though the reproduced level of $(f_c)$ and (B) are varied.

Thus the $f_Y$ recording curent should be in the range between the points E' and F' in Figure 6. The interval between the currents at the points E' and F' varies in accordance with the recorded wavelength of $f_Y$. It was, for example, about 10dB when a signal with the recorded wavelength of $1\mu m$ was recorded on an ME tape having a magnetic layer of Co with the thickness of 1000Å and the Hc of 100 Oe (8000 A/m).

The mixing ratio of the recording current of $f_c$ to that of $f_Y$ is determined as follows:

The lower limit of the mixing ratio is determined in consideration of S/N required for the system, and generally the practical lower limit is 1/5.

The upper limit of the mixing ratio is preferably 2/5 which is the optimum value represented by the point H in Figure 7, but practically it may be 1/2 represented by a point H' in Figure 7 at which the reproduced $f_Y$ level is reduced by 1dB from the maximum level. The mixing ratio more than 1/2 is not practical because of abrupt decrease of the reproduced $f_Y$ level and abrupt increase of the cross modulation.

Although the characteristics curves of Figures 6 and 7 are data in the case where $f_Y$ has the recorded wavelength of 1 $\mu m$ and $F_c$ 10 $\mu m$, the similar results were obtained in the range of the recorded wavelength of $f_Y$ from 0.5 $\mu m$ to 3 $\mu m$ and $f_c$ from 5 $\mu m$ to 20 $\mu m$ which is the range where usual VTR is operated.

As described above, the recording current range from E' to F' is sutable in consideration of the characteristics of the reproduced signals $f_Y$, $f_c$ and cross modulation level B in Figure 6. In such range, it is possible to select the recording current level of $(f_c)$ higher than that of point E by X dB at the maximum with out causing the decrease in the reproduction level of $(f_Y)$. Therefore higher S/N is obtained in such current range.

The above-mentioned electromagnetic characteristics are due to the following phenomenon.

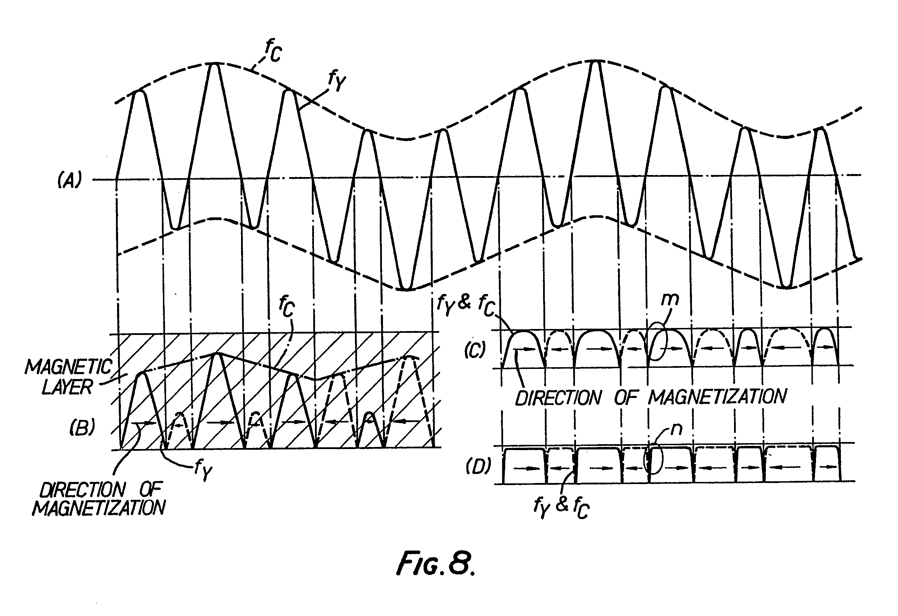

A chart (A) in Figure 8 shows a wave form of a multiplex signal of $f_Y$ and $f_c$. A chart (B) shows a magnetization in a magnetic layer of the coating tape by the recording signal of the chart (A). As seen from this chart, the modulation of $f_Y$ by $f_c$ appears as a variation of magnetization in the direction of the thickness of the magnetic layer. The information concerning $f_c$ is recorded as an intensity change of magnetization by $f_c$ recording signal. The magnetization direction is oridinarily parallel to the tape surface, but if a large recording current of $f_Y$ flows, it is changed, so that self-demagnetization occurs, causing the reproduced $f_Y$ level to be decreased. At the same time recording demagnetization also acts to reduce the reproduced $f_Y$ level.

Charts (C) and (D) show magnetizations in the ME tape, by a small recording current and a sufficiently large recording current, respectively. In the case of ME tape, the saturation as shown in Figure 6 occurs with the large recording current, because the recording is performed by a region of sharp magnetic field of a magnetic head and the recording demagnetization is difficult to occur due to the thinness of the magnetic layer. Therefore the information concerning $f_c$ is recorded as rather change of width ratio (duty) of pulses representing $f_Y$ than the change of the magnetization intensity. Under the recording condition according to the present invention, electromagnetic transducing is operated in the saturation range such as represented by the curve $(f_{YF})$ in Figure 7, so that $f_c$ is recorded as the duty change of $f_Y$, whereby the reproduced $f_Y$ level hardly decreases even if the mixing ratio is changed. Further the cross modulation is reduced by operating the recording in the saturation range. The reason is that $f_c$ is included in leading and trailing edges of recorded $f_Y$ signal and the transducing of the leading and trailing edges is superior in linearity when the recording current is large such as a portion n of the chart (C) than when the recording current is small such as a portion m of the chart (D).

By recording a video signal on the ME tape as mentioned above, it is possible to make larger the mixing ratio of the chrominance signal than in the conventional method, so as to improve the S/N of reproduced chrominance signal, because of increased reproduction output. Further it is possible to determine the mixing ratio in the range of low cross modulation. Further since the recording is operated in the range where the reproduced level is fully saturated, the reproduction output is difficult to fluctuate, even if the recording current is somewhat dispersed.

In the following is described a comparison of specified examples of the method according to the present invention and the conventional method.

In the example of the conventional method, there was employed a coating tape having a magnetic layer with the thickness of 5 $\mu$m and Hc of 650 Oe (52000 A/m) and containing a magnetic material of $\gamma$-$Fe_2O_3$ with Co.

In the example of the invention, there was employed an ME tape having a magnetic layer made of 100% of Co or Co with 20 to 30% of Ni with the thickness of 1000Å and Hc of 1000 Oe (80000 A/m).

Measurements were performed under the condition such that the recorded wavelength of $f_Y$ is 1 $\mu$m, that of $f_c$ was 10 $\mu$m and a magnetic head with a track width of 20 $\mu$m, a gap length of 0.3 $\mu$m and winding of 17 turns was used.

In the example of the conventional method, the optimum recording current of $f_Y$ (which corresponds to the value at the point C in Figure 4) was 16 mA peak-peak, peak-peak being here in after referred to as p-p, the optimum recording current of $f_c$ (the value at the point D in Figure 5) 4 $mA_{p-p}$, and the cross modulation —30dB.

In the example of the invention the $f_Y$ recording current at which the saturation of the reproduced $f_Y$ level begins (the value at the point E in Figure 6) was 16 $mA_{p-p}$, and the $f_Y$ recording current with which the reproduced $f_Y$ level was reduced by 1dB (the value at the point F' in Figure 6) was 48 $mA_{p-p}$. When the $f_Y$ was recorded at 32 $mA_{p-p}$ so that the characteristic of the curve ($f_{YF}$) in Figure 7 was obtained, the optimum $f_c$ recording current corresponding to the point H in Figure 7 was about 13 $mA_{p-p}$, in which the cross modulation was —30dB.

The reproduced $f_c$ level at the point G in Figure 7 ($f_Y$ recording current=16 mA) was approximately equal to that at the point D in Figure 5. And the difference X between the reproduced $f_c$ levels at the point H and G in Figure 7 was 3 dB. Thus the reproduced $f_c$ level at the optimum condition according to the present invention was higher by 3 dB than that at the optimum condition according to the conventional method using the coating tape.

The reproduced $f_Y$ level in the case of the ME tape was higher than that in the case of the coating tape by 10 to 15dB.

The characteristics as mentioned above were also obtained with the ME tape in which the magnetic layer was made of an principal component of Co and 15% or so of an additive such as Ni or Cr and has the thickness from 500Å to 2000Å. Further Fe may be used as a principal component. Also approximately the same characteristics is obtained with a metal plated tape or an ion plating tape which has a fairly thin magnetic layer. The characteristics as mentioned above is obtained in the condition that the magnetic layer of the recording medium has the thickness smaller than the recorded wavelength of each signal of superimposed signals, and so the present invention is applicable provided such condition is satisfied.

Although the invention is described in two signal recording, it is applicable to more-than-three signal recording provided that signals other than two principal signals are recorded at magnitude small enough not to substantially affect the transducing of the two principal signals. For example, frequency modulated audio signal or pilot signal may be recorded in addition to the principal signals of the luminance signal and chrominance signal.

**Claims**

1. A method for recording on a magnetic recording medium a multiplex signal comprising two principal signals of different frequency, and

using a magnetic recording medium having a magnetic metal layer of thickness less than the recorded wavelength of each of said two principal signals; characterised by
recording the higher frequency one ($f_Y$) of said principal signals at a recording current (E') having a lower limit 2dB larger than the lower limit (E) of the recording current with which a reproduced output level is saturated and a maximum limit (F') not exceeding the current for which the reproduced output level is reduced from said saturated condition by 1dB; and
recording said other ($f_c$) of said principal signals at a recording current between a quarter and a half of that for recording said higher frequency signal.

2. A magnetic recording method as claimed in claim 1, in which said multiplex signal comprises a frequency modulated luminance signal ($f_Y$) and a frequency converted chrominance signal ($f_c$) in a color video signal recording.

3. A magnetic recording method as claimed in claim 1, in which one or more additional signals other than said two principal signals are recorded in multiplex condition at a magnitude small enough not to substantially affect the transducing of said two principal signals.

4. A magnetic recording method as claimed in claim 1, in which said signal of lower frequency is recorded at a current smaller than two-fifths as large as that of said signal of higher frequency.

5. A magnetic recording method as claimed in claim 1, in which the magnetic layer of the magnetic recording medium comprises a vacuum-evaporated metal layer.

**Patentansprüche**

1. Verfahren zum Aufzeichnen eines Multiplexsignals mit zwei Hauptsignalen von verschiedenen Frequenzen auf einem magnetischen Aufzeichnungsmedium, bei dem ein magnetisches Aufzeichnungsmedium mit einer magnetischen Metallschicht einer Dicke verwendet wird, die niedriger ist als die aufgezeichnete Wellenlänge von jedem der beiden Hauptsignale,

gekennzeichnet durch das Aufzeichnen des höherfrequenten ($f_y$) der Hauptsignale bei einem Aufzeichnungsstrom (E'), dessen untere Grenze 2dB höher ist als die untere Grenze (E) des Aufzeichnungsstroms, bei dem ein wiedergegebener Ausgangspegel gesättigt ist, und dessen maximale Grenze (F') nicht den Strom übersteigt, bei dem der wiedergegebene Ausgangspegel gegenüber dem Sättigungszustand um 1dB vermindert ist; und
durch das Aufzeichnen des anderen ($f_c$) der Hauptsignale bei einem Aufzeichnungsstrom zwischen einem Viertel und einer Hälfte desjenigen zum Aufzeichnen des höherfrequenten Signals.

2. Magnetisches Aufzeichnungsverfahren nach Anspruch 1, bei dem das Multiplexsignal ein frequenzmoduliertes Helligkeitssignal ($f_y$) und ein frequenzumgesetztes Farbsignal ($f_c$) bei einem Farbvideosignalaufzeichnen umfaßt.

3. Magnetisches Aufzeichnungsverfahren nach Anspruch 1, bei dem ein zusätzliches Signal oder mehrere zusätzliche Signale abgesehen von den beiden Hauptsignalen in einem Multiplexzustand bei einer Größe aufgezeichnet werden, die niedrig genug ist, daß die Übertragung der beiden Hauptsignale nicht wesentlich beeinträchtigt wird.

4. Magnetisches Aufzeichnungsverfahren nach Anspruch 1, bei dem das Signal der niedrigeren Frequenz mit einem Strom aufgezeichnet wird, der kleiner als zwei Fünftel der Größe desjenigen Stromes des Signals mit höherer Frequenz ist.

5. Magnetisches Aufzeichnungsverfahren nach Anspruch 1, bei dem die magnetische Schicht des magnetischen Aufzeichnungsmediums eine Vakuum-bedampfte Metallschicht ist.

**Revendications**

1. Procédé d'enregistrement sur un support d'enregistrement magnétique d'un signal multiplex comprenant deux signaux principaux de fréquences différentes, où

on utilise un support d'enregistrement magnétique portant une couche métallique magnétique d'une épaisseur inférieure à celle de la longueur d'onde enregistrée de chacun desdits deux principaux signaux;
caractérisé en ce que:
on enregistre celui ($f_y$) desdits signaux principaux qui a la fréquence la plus élevée avec un courant d'enregistrement (E') dont la limite inférieure est de 2 dB plus grande que la limite inférieure (E) du courant d'enregistrement pour lequel le niveau de sortie reproduit est saturé et dont la limite maximale (F') ne dépasse pas le courant pour lequel le niveau de sortie reproduit est réduit de 1 dB par rapport audit état de saturation; et

on enregistre l'autre ($f_c$) desdits signaux principaux avec un courant d'enregistrement compris entre le quart et la moitié du courant d'enregistrement dudit signal de fréquence supérieure.

2. Procédé d'enregistrement magnétique selon la revendication 1, dans lequel ledit signal multiplex comprend un signal de luminance modulé en fréquence ($f_y$) et un signal de chrominance converti en fréquence ($f_c$) dans un enregistrement de signal vidéo couleur.

3. Procédé d'enregistrement selon la revendication 1, dans lequel un ou plusieurs signaux supplémentaires, autres que lesdits deux signaux principaux, sont enregistrés en multiplexage avec une amplitude suffisamment petite pour ne pas sensiblement altérer la transduction desdits signaux principaux.

4. Procédé d'enregistrement magnétique selon la revendication 1, dans lequel ledit signal de fréquence inférieure est enregistré avec un courant plus petit que les deux cinquièmes de celui dudit courant de fréquence supérieure.

5. Procéde d'enregistrement magnétique selon la revendication 1, dans lequel la couche magnétique du support d'enregistrement magnétique comprend un couche de métal évaporé sous vide.

FIG.1.

FIG.2A.

FIG.2B.

FIG.3

(Prior Art)

RECORDING LEVEL OF $f_Y$ (mA$_{peak-peak}$) FIG.4

(Prior Art)

RECORDING LEVEL OF $f_C$ (mA$_{peak-peak}$) FIG.5

2

FIG.6

FIG.7

3

Fig.8.

4